# FASCICULE DE BREVET EUROPEEN

(11) **EP 3 595 873 B1**
(45) Date de publication et mention de la délivrance du brevet: **22.07.2026**
(21) Numéro de dépôt: 18714570.1
(22) Date de dépôt: 13.03.2018
(51) Int. Cl.: B29C 65/02, B29C 65/06, B29C 65/08, B29C 65/14, B29C 65/16, B29C 65/20, B29C 65/22, B29C 65/36, B29K 101/12, B29K 105/12, B29K 33/04

(54) **PROCEDE DE FABRICATION DE PIECES EN COMPOSITE POLYMERE THERMOPLASTIQUE, ET OBJET OBTENU PAR LEDIT PROCEDE**
VERFAHREN ZUR HERSTELLUNG VON VERBUNDTEILEN AUS THERMOPLASTISCHEM POLYMER UND NACH DIESEM VERFAHREN HERGESTELLTER GEGENSTAND
PROCESS FOR MANUFACTURING THERMOPLASTIC POLYMER COMPOSITE PARTS, AND OBJECT OBTAINED BY SAID PROCESS

(30) Priorité: 13.03.2017 FR 1752046
(43) Date de publication de la demande: 22.01.2020
(73) Titulaire: Arkema France, 92800 Puteaux (FR)
(72) Inventeur: BOZSAK, Virginia, 78000 Versailles (FR); CLEDAT, Guillaume, 59700 Marcq en Baroeul (FR); GERARD, Pierre, 64230 Denguin (FR); GLOTIN, Michel, 92210 Saint-Cloud (FR)
(74) Mandataire: Arkema Patent
(86) Numéro de dépôt international: PCT/FR2018/050591
(87) Numéro de publication internationale: WO 2018/172657

(56) Documents cités:
- EP-A1- 1 939 254
- EP-A1- 2 669 081
- EP-A1- 2 695 723
- EP-A1- 2 796 272
- EP-A1- 2 799 211
- EP-A1- 2 977 187
- EP-A1- 2 998 102
- EP-A1- 3 112 130
- JP-A- 2001 301 039
- JP-A- 2013 233 729
- JP-A- 2014 076 565
- JP-A- H1 190 986
- US-A1- 2008 156 411
- US-A1- 2014 286 697
- US-A1- 2015 246 480
- WACHTLER ET AL: "Friction Stir Welding von faserverstärkten Polymeren = Friction Stir Welding of fibre-reinforced polymers", THESIS,, 1 January 2010 (2010-01-01), pages 1 - 184, XP009163024
- CAMPBELL F C ED - CAMPBELL FLAKE C: "Manufacturing processes for advanced composites, Chapter 10 (Thermoplastic Composites: An Unfulfilled Promise)", 1 January 2004, MANUFACTURING PROCESSES FOR ADVANCED COMPOSITES, ELSEVIER ADVANCED TECHNOLOGY, OXFORD, GB, PAGE(S) 1 - 41, ISBN: 978-1-85617-415-2, XP002615944

## Description

L'invention appartient au domaine des objets en composite polymère thermoplastique. Plus particulièrement, l'invention concerne un procédé de fabrication de pièces en composite polymère comportant une matrice polymère thermoplastique. L'invention concerne également un objet en composite polymère thermoplastique notamment issu d'un tel procédé.

### [Art antérieur]

Des objets à base de composite polymère, comportant un renfort fibreux maintenu dans une matrice de polymères rigide, sont de plus en plus utilisés dans tous les domaines, notamment les domaines du bâtiment, de l'automobile, de l'aéronautique et de l'aérospatiale. En effet, ces composites polymères renforcés par des fibres présentent un rapport résistance / poids élevé et des propriétés mécaniques souhaitables qui les rendent de plus en plus populaires pour la fabrication d'objets tels que peaux, raidisseurs, traverses, caisse en blanc, profilés, nacelles, portes, empennages, dérives, ailerons ou volets.

Les polymères utilisés pour la réalisation de ces objets sont souvent des polymères thermodurcissables et les techniques de réalisation de ces objets incluent généralement la réalisation de plusieurs pièces à assembler par des procédés d'injection basse pression, d'imprégnation, de moulage par infusion, d'infusion de résine assistée par le vide (VARI), de pultrusion, de moulage par infusion sous vide, de moulage par infusion sous pression, de moulage par transfert de résine et ses variantes, ou de moulage de pré-imprégnés.

Diverses techniques sont utilisées pour assembler ces pièces en composite polymère. Ces techniques de fixation comprennent principalement la fixation mécanique et le collage (adhésifs). Les assemblages à rivets sont relativement coûteux (e.g. main d'œuvre) et complexes à mettre en œuvre, et les rivets utilisés augmentent le poids global. Les liaisons adhésives (e.g. colles époxydes ou polyesters ou polyuréthanes) sont également coûteuses et complexes, car elles nécessitent une préparation spéciale des surfaces à coller ensemble et généralement la mise en œuvre d'une cuisson et/ou d'un outillage particulier. De plus, outre des moyens de fixation non optimaux, ces composites polymères thermodurcissables ne sont pas recyclables. WACHTLER ET ALL : "Friction Stir Welding von faserverstärkten Polymeren = Friction Stir Welding of fibre-reinforced polymers",THESIS,, 1 janvier 2010 (2010-01-01), pages 1-184, XP009163024, décrit un autre état de la technique pertinent.

Pour répondre à ces problèmes, la réalisation de pièces en matériaux thermoplastiques, pouvant être assemblées par des techniques de soudage, a été proposée. Dans le soudage, la température des pièces à assembler est élevée au-dessus de la température de fusion ou ramollissement de la matrice polymère, les pièces sont placées dans la position de l'assemblage jusqu'au refroidissement de la résine pour obtenir une liaison mécanique de la zone assemblée.

Ainsi, des objets en polymère thermoplastique ont été développés. Ils sont généralement recyclables et peuvent être fixés par des techniques de soudages. Néanmoins, ces objets en polymère thermoplastique sont constitués par des procédés non compatibles avec les machines développées pour les objets en composite polymère thermodurcissable. En outre de tels systèmes nécessitent la mise en œuvre de températures élevées (généralement supérieures à 100 °C) pour la création des pièces à assembler. Cette contrainte est particulièrement limitative pour la réalisation de pièces de grandes tailles.

Par conséquent, il existe un besoin pour un procédé de fabrication d'objets en composite polymère thermoplastique capable de répondre aux problèmes engendrés par les méthodes existantes, aisé à mettre en œuvre, et ne nécessitant pas de haute température pour la fabrication des pièces constitutives de l'objet en composite polymère thermoplastique. Des procédés de fabrication d'objets sont mentionné dans les document suivantes US2008/156411, EP3112130, EP1939254, EP2669081, US2014/286697, EP2796272, EP2977187, EP2695723, EP2998102, EP2799211, JP2001-301039, US2015/246480, JP2013-233729, JP H11 90986 et JP2014 076565.

### [Problème technique]

L'invention a donc pour but de remédier aux inconvénients de l'art antérieur. En particulier, l'invention a pour but de proposer un procédé de fabrication de pièces en composite polymère thermoplastique plus rapide que les procédés existants et permettant également un assemblage, une réparation ou des ajustements aisés et rapides.

L'invention a en outre pour but de proposer un objet en composite polymère thermoplastique, pouvant être fabriqué plus rapidement que les objets en composite polymère thermodurcissable classiques tout en étant de préférence majoritairement recyclable, résistant aux contraintes mécaniques et chimiques auxquels peuvent être soumis l'objet lors de son utilisation.

### [Brève description de l'invention]

A cet effet, l'invention porte sur un procédé de fabrication d'un objet en composite polymère thermoplastique, à partir d'au moins deux pièces en composite polymère thermoplastique (méth)acrylique, ledit composite polymère thermoplastique comportant un renfort fibreux et une matrice de polymère thermoplastique, ledit procédé comprenant les étapes de :
- fabrication d'au moins deux pièces en composite polymère thermoplastique (méth)acrylique comportant un renfort fibreux et une matrice de polymère thermoplastique
   (méth)acrylique à une température inférieure à 150°C, ladite étape de fabrication d'au moins deux pièces en composite polymère thermoplastique (méth)acrylique, comprend les sous-étapes suivantes :
   - imprégnation d'un renfort fibreux avec une composition liquide (méth)acrylique,
   - polymérisation de la composition liquide (méth)acrylique
- disposition des deux pièces en composite polymère thermoplastique (méth)acrylique de manière adjacente ou se chevauchant au niveau d'une zone d'interface d'assemblage, et
- chauffage pour faire fondre la matrice de polymère thermoplastique (méth)acrylique au niveau de ladite zone d'interface d'assemblage de façon à former un objet en composite polymère thermoplastique comportant une interface soudée.

En effet, l'utilisation de composite polymère thermoplastique comportant un polymère thermoplastique (méth)acrylique permet de réduire les temps de cycle par rapport notamment aux polymères thermodurcissables classiquement utilisés. Ainsi, il permet un gain de temps de production comparé aux procédés classiques utilisant des polymères thermodurcissables.

De plus, l'objet en composite polymère thermoplastique obtenu à partir du procédé de fabrication selon l'invention est aisément recyclable contrairement aux objets en composite polymère thermodurcissable habituellement utilisés dans ces domaines. Enfin, la présence d'une interface soudée donne la possibilité, via une montée en température de l'interface, de réaliser des assemblages, des ajustements de positionnement des pièces ou encore des réparations sans nécessiter une installation particulière.

**Selon d'autres caractéristiques optionnelles du procédé** :
- les au moins deux pièces en composite polymère thermoplastique sont des pièces en composite polymère thermoplastique (méth)acrylique. En outre, de préférence, le procédé comprend une étape préalable de fabrication d'au moins deux pièces en composite polymère thermoplastique (méth)acrylique, comportant un renfort fibreux et une matrice de polymère thermoplastique (méth)acrylique. En effet, dans le cadre de l'utilisation de composite polymère thermoplastique (méth)acrylique, le procédé de fabrication selon l'invention, peut être mis en œuvre à partir de pièces composite polymère thermoplastique fabriquées avec les équipements industriels actuellement les plus utilisés (e.g. moulage par injection basse pression, moulage par infusion) et ne nécessite donc pas, contrairement aux pièces en composite polymère thermoplastique tels que les polyamides, de modifier l'outillage industriel actuellement utilisé dans les divers domaines d'application de l'invention. Ainsi, dans ce mode de réalisation, le procédé de fabrication selon l'invention ne comporte pas, contrairement à un procédé utilisant des polymères thermoplastiques classiques (e.g. polyamides), une montée à des températures élevées (e.g. > 200 °C) sur l'ensemble des pièces et permet ainsi aisément l'assemblage de pièces ayant de grandes dimensions.
- le renfort fibreux comporte des fibres sélectionnées parmi des fibres de carbone, ou des fibres de verre ou des fibres de basalte ou des fibres à base de polymères, ou des fibres végétales, seules ou en mélange.
- le renfort fibreux est à base de fibres présentant un rapport de forme d'au moins 1000. Un tel rapport de forme permet d'obtenir des objets en composite polymère thermoplastique ayant des propriétés mécaniques améliorées.
- le procédé de fabrication comprend en outre une étape d'application d'une pression au niveau de l'interface d'assemblage. Cela permet de souder ensemble les au moins deux pièces en composite polymère thermoplastique avec une interface soudée renforcée.
- le polymère thermoplastique (méth)acrylique est sélectionné parmi les polymères thermoplastiques (méth)acryliques obtenus à partir d'une composition liquide (méth)acrylique couramment appelée « sirop » ou résine de polymère thermoplastique. Cette composition liquide (méth)acrylique est, utilisée pour imprégner le renfort fibreux, puis polymérisée. Après polymérisation, elle constitue la matrice du composite polymère. La polymérisation est effectuée rapidement (e.g. entre 30 secondes et 3 heures) avec une bonne conversion afin d'augmenter la productivité. Une composition liquide ou un sirop comprenant un monomère (méth)acrylique et un polymère (méth)acrylique précurseur est décrit dans WO 2013/056845 et WO 2014/013028. Par exemple, le polymère thermoplastique (méth)acrylique précurseur est sélectionné parmi le poly(méthacrylate de méthyle) (PMMA) ou les copolymères de méthacrylate de méthyle (MMA), ou leurs mélange. De façon préférée, le polymère thermoplastique (méth)acrylique précurseur peut être choisi parmi un homopolymère de méthacrylate de méthyle (MMA) ou un copolymère comprenant au moins 50 %, de façon préférée au moins 70 %, de façon plus préférée au moins 80 %, avantageusement au moins 90 % et plus avantageusement au moins 95 % en poids de méthacrylate de méthyle. Les polymères (méth)acryliques obtenus, par exemple des poly(méthacrylate de méthyle) (PMMA) ou les copolymères de méthacrylate de méthyle (MMA), ou leurs mélange sont particulièrement adaptés aux procédés industriels existant de fabrication des objets en composite polymère et confèrent aux objets en composite polymère des propriétés mécaniques et chimiques satisfaisantes.
- le polymère thermoplastique (méth)acrylique possède une température de transition vitreuse (Tg) comprise entre 50°C et 160°C, de préférence comprises entre 70°C et 140°C, et de manière encore plus préférée 90°C et 120°C. En outre, le polymère thermoplastique (méth)acrylique ou une partie du polymère thermoplastique (méth)acrylique possède un indice de fluage (MFI) selon l'ISO 1133 (230 °C/3,8 kg) inférieur à 20 g/10 min. De préférence, l'indice de fluage est inférieur à 18 g/10 min, plus préférablement inférieur à 16 g/10 min, avantageusement inférieur à 13 g/10 min. Cela permet de faciliter la production de l'objet en composite polymère et ouvre aussi la voie à des assemblages, ajustement ou réparation aisés.
- la matrice de polymère thermoplastique (méth)acrylique comprend en outre un ou plusieurs additifs ou charges. L'ensemble des additifs et charges facultatifs sont ajoutés au sirop (méth)acrylique liquide avant l'imprégnation et/ou la polymérisation. Comme additifs, on peut citer des additifs organiques comme les modifiants chocs ou des copolymères à blocs, des stabilisateurs thermiques, des stabilisateurs aux UV, des lubrifiants et des mélanges de ceux-ci. Le modifiant chocs est sous forme de particules fines ayant un cœur élastomère et au moins une enveloppe thermoplastique, la taille des particules étant en général inférieure à 1 µm et avantageusement de 50 à 300 nm. Le modifiant choc est préférablement préparé par polymérisation en émulsion. La proportion de modifiants chocs dans la matrice thermoplastique polymère est de 0 à 50 %, de préférence de 0 à 25 %, et avantageusement de 0 à 20 % en poids. Comme charges, on peut citer des nanotubes de carbone ou des charges minérales, y compris des nanocharges minérales (TiO₂, silice).
- les pièces en composite polymère thermoplastique sont fabriquées à une température de préférence inférieure à 120 °C, de façon encore plus préférée inférieure à 100°C. En effet, la composition liquide (méth)acrylique, utilisée pour lors de la fabrication des pièces en composite polymère, est liquide à une température bien inférieure aux températures de fusion classiques des thermoplastiques classiques. Ainsi, cela permet de réaliser les pièces en composite polymère thermoplastique qui sont de très grandes dimensions sans avoir à mettre en œuvre des procédés où lesdites pièces sont chauffées à des températures élevées.
- les pièces en composite polymère thermoplastique sont fabriquées par moulage par injection basse pression, moulage par infusion ou par moulage de ruban pré-imprégnés de composite polymère thermoplastique (méth)acrylique.
- au moins une des deux pièces en composite polymère thermoplastique comporte une couche de polymères thermoplastiques (méth)acryliques d'au moins 0,5 mm, de préférence 1 mm, de façon préférée d'au moins 2 mm d'épaisseur, sur la surface destinée à être soudée. Cela permet notamment d'éviter l'apparition de zones à moindre concentration en résine au niveau d'une interface soudée pourrait entrainer une fragilisation de l'objet en composite polymère thermoplastique.
- lors de l'étape de chauffage, la température au niveau de l'interface d'assemblage est comprise entre 160 et 300°C, de préférence entre 200 et 250°C.
- la matrice de polymère thermoplastique, de préférence (méth)acrylique, est fondue par une technique sélectionnée parmi : le soudage par ultrasons, le soudage par induction, le soudage par fil résistif, le soudage par friction-agitation, le soudage au laser, le chauffage par infrarouge ou par rayonnement ultraviolet, de préférence par soudage par fil résistif.
- au moins une des deux pièces en composite polymère thermoplastique comporte au moins un filament résistif positionné au niveau de l'interface d'assemblage.

L'invention porte en outre sur objet en composite polymère thermoplastique fabriqué à partir d'au moins deux pièces en composite polymère thermoplastique caractérisé en ce que ledit composite polymère thermoplastique comporte un renfort fibreux et une matrice de polymère thermoplastique, de préférence (méth)acrylique, et en ce que les au moins deux pièces en composite polymère thermoplastique sont reliées par une interface soudée.

**Selon d'autres caractéristiques optionnelles de l'objet** :
- l'objet en composite polymère thermoplastique ne comprend pas plus de 50 %, de préférence pas plus de 40 %, de façon plus préférée pas plus de 30 %, de façon encore plus préférée pas plus de 20 %, de façon plus avantageuse pas plus de 15 % en poids et de façon encore plus avantageuse pas plus de 10 % en poids de polymères thermodurcissables tel qu'une résine époxyde. Ainsi, l'objet en composite polymère thermoplastique selon l'invention présente un gain très significatif en termes de temps de production et une capacité accrue à être recyclée. De même, l'objet en composite polymère thermoplastique ne comprend pas plus de 10 % en poids, de préférence pas plus de 8% en poids, de de façon avantageuse pas plus de 7 % en poids, de façon plus avantageuse pas plus de 6 % en poids et de façon encore plus avantageuse pas plus de 5 % en poids de colles, de préférence de colles thermodurcissables.
- l'objet en composite polymère thermoplastique est sélectionné parmi : un revêtement constitué d'une pluralité de panneaux, un garde-corps, un profilé de fenêtre, le fuselage d'un aéronef, des renforts pour la construction, une traverse (notamment de véhicule), une partie de caisse en blanc, une nacelle, un empennage, une dérive, un aileron, un volet, une pale d'hydrolienne, une coque, un pont, une cloison de bateau, des pièces d'habillages (capotage) pour automobile.

D'autres avantages et caractéristiques de l'invention apparaitront à la lecture de la description suivante donnée à titre d'exemple illustratif et non limitatif, en référence aux Figures annexées qui représentent :
- Figure 1, un schéma d'un mode de réalisation préféré d'un procédé de fabrication selon l'invention. Les étapes en pointillées sont optionnelles.
- Figures 2A, à 2E, des vues en coupe schématiques d'assemblages de pièces en composite polymère thermoplastique.
- Figures 3A et 3B, deux illustrations simplifiées en vue du dessus d'une coupe longitudinale de deux pièces d'un profilé de fenêtre assemblées conformément au procédé selon l'invention.
- Figures 4A et 4B, une vue schématique en perspective de traverses de véhicule selon l'invention.
- Figure 5, une vue schématique en perspective d'une portion de fuselage d'aéronef selon l'invention.

### [Description de l'invention]

Dans la suite de la description, l'« interface soudée », correspond au joint soudé entre des pièces, ou des parties de pièce. Elle se rapporte à la zone fondue, c'est-à-dire la zone de polymère thermoplastique qui est passée à l'état liquide au cours de l'opération de soudage. Le soudage selon l'invention peut être réalisé avec ou sans apport de matière thermoplastique d'apport notamment (méth)acrylique.

Par « filament résistif» on entend au sens de l'invention un filament comprenant un matériau présentant une résistivité supérieure à 1 10⁻² Ω mm²/m à 20 °C, par exemple supérieure à 0,1 Ω mm²/m à 20 °C. Le filament résistif peut par exemple comprendre du métal ou un alliage de métal ou tous autres éléments organiques conducteurs à base de carbone comme un fil ou film polymérique conducteur à base de noir de carbone, de nanotubes de carbone, de graphènes. De préférence, le filament résistif possède une température de fusion élevée et supérieure à la température de ramollissement ou écoulement (e.g. transition vitreuse) du polymère thermoplastique (méth)acrylique selon l'invention. La température de fusion du filament résistif est de préférence supérieure à 300°C, de façon plus préférée supérieure à 500°C, par exemple supérieure à 750°C. Dans le cas d'un fil ou film polymère conducteur, il devra présenter une température d'écoulement au moins égale à celle du polymère thermoplastique, de préférence (méth)acrylique.

L'expression « composite polymère », au sens de l'invention, désigne un matériau multicomposant comprenant au moins deux composants non miscibles dans lequel au moins un composant est un polymère et l'autre composant peut par exemple être un renfort fibreux.

On entend par « renfort fibreux » ou « substrat fibreux », au sens de l'invention, plusieurs fibres, des stratifils unidirectionnels ou un mat à filament continu, des tissus, des feutres ou des non-tissés qui peuvent être sous la forme de bandes, nappes, tresses, mèches ou pièces.

On entend par « matrice », une matière servant de liant et capable de transférer des efforts au renfort fibreux. La « matrice de polymère » comporte des polymères mais peut également comporter d'autres composés ou matériaux. Ainsi, la « matrice de polymère (méth)acrylique », se rapporte à tout type de composés, polymères, oligomères, copolymères ou copolymères à blocs, acryliques et méthacryliques. Cependant, on ne sortirait pas du cadre de l'invention si la matrice de polymère (méth)acrylique comprend jusqu'à 10% en poids, de préférence moins de 5% en poids d'autres monomères non acryliques, choisis par exemple dans le groupe : butadiène, isoprène, styrène, styrène substitué tel que l'α-methylstyrène ou le tert-butylstyrène, cyclosiloxanes, vinylnaphthalènes et vinyl pyridines.

Par « polymère », on entend soit un copolymère soit un homopolymère. On entend par « copolymère », un polymère regroupant plusieurs unités monomères différentes et par « homopolymère », un polymère regroupant des unités monomères identiques. On entend par « copolymère à blocs », un polymère comprenant une ou plusieurs séquences ininterrompues de chacune des espèces polymères distinctes, les séquences polymères étant chimiquement différentes l'une de l'autre et étant liées entre elles par une liaison covalente. Ces séquences polymères sont encore dénommées blocs polymères.

Le terme « amorceur radicalaire », au sens de l'invention, désigne un composé qui peut démarrer/initier la polymérisation d'un monomère ou de monomères.

Le terme « polymérisation », au sens de l'invention, désigne le procédé de conversion d'un monomère ou d'un mélange de monomères en un polymère.

Le terme « monomère », au sens de l'invention, désigne une molécule qui peut subir une polymérisation.

On entend par « polymère thermoplastique », au sens de l'invention, un polymère généralement solide à température ambiante, pouvant être cristallin, semi-cristallin ou amorphe, et qui se ramollit lors d'une augmentation de température, en particulier après passage de sa température de transition vitreuse (Tg) et s'écoule à plus haute température et pouvant observer une fusion franche au passage de sa température dite de fusion (Tf) (lorsqu'il est semi-cristallin), et qui redevient solide lors d'une diminution de température en dessous de sa température de fusion et en dessous de sa température de transition vitreuse. Cela s'applique également pour des polymères thermoplastiques légèrement réticulés par la présence de monomères ou d'oligomères multifonctionnels dans la formulation du « sirop » (méth)acrylate, en pourcentage massique de préférence moins de 10%, de préférence moins de 5% et de façon préférée moins de 2%, tel que par exemple des agents réticulant en pourcentage massique inférieur à 1 %, ou inférieur à 0,5%, qui peuvent être thermoformés lorsqu'ils sont chauffés au-dessus de la température de ramollissement.

On entend par « polymère thermodurcissable », au sens de l'invention, une matière plastique qui se transforme de manière irréversible par polymérisation en un réseau polymère insoluble.

On entend par « monomère (méth)acrylique », tout type de monomère acrylique et méthacrylique.

On entend par « polymère (méth)acrylique », un polymère comprenant essentiellement des monomères (méth)acryliques qui représentent au moins 50% en poids ou plus du polymère (méth) acrylique.

Le terme « PMMA », au sens de l'invention, désigne des homo- et copolymères de méthacrylate de méthyle (MMA), le rapport en poids de MMA dans le PMMA étant de préférence d'au moins 70 % en poids pour le copolymère de MMA.

Dans la suite de la description, les mêmes références sont utilisées pour désigner les mêmes éléments.

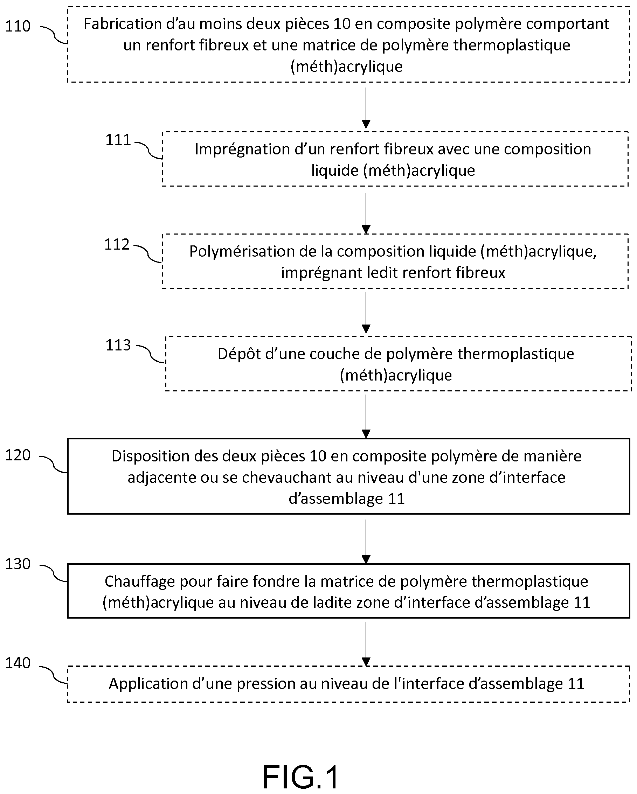

**Selon un premier aspect, l'invention porte sur un procédé 100 de fabrication** d'un objet 1 en composite polymère thermoplastique à partir d'au moins deux pièces en composite polymère thermoplastique, ledit composite polymère thermoplastique comportant un renfort fibreux et une matrice de polymère thermoplastique, tel que représenté dans la figure 1. De façon préférée, le procédé est mis en œuvre à partir d'au moins deux pièces en composite polymère thermoplastique (méth)acrylique, ledit composite polymère thermoplastique (méth)acrylique comportant un renfort fibreux et une matrice de polymère thermoplastique (méth)acrylique.

Ce procédé comprend principalement les étapes suivantes :
- disposition 120 des deux pièces 10 en composite polymère thermoplastique de manière adjacente ou se chevauchant au niveau d'une zone d'interface d'assemblage 11, et
- chauffage 130 pour faire fondre la matrice de polymère thermoplastique au niveau de ladite zone d'interface d'assemblage 11 de façon à former un objet 1 en composite polymère thermoplastique comportant une interface soudée 12.

Les polymères thermoplastiques (méth)acryliques entrant dans la constitution de la matrice associée au renfort fibreux, peuvent être choisis parmi les polymères et copolymères de la famille des acryliques comme les polyacrylates. Ils sont plus particulièrement sélectionnés parmi le polyméthacrylate de méthyle (PMMA) ou ses dérivés ou les copolymères de méthacrylate de méthyle (MMA) ou leurs mélanges.

De façon préférée, le polymère thermoplastique (méth)acrylique, formant la matrice de polymère thermoplastique (méth)acrylique, possède une température de transition vitreuse (Tg) comprises entre 50°C et 160°C, de préférence comprises entre 70°C et 140 °C, et de manière encore plus préférée 90°C et 120 °C ce qui présente un avantage par rapport à d'autres polymères thermoplastiques tels que les polyamines. En effet, les polyamines ont généralement des températures de fusion très élevées, à savoir à partir de 200°C et plus, ce qui ne facilite pas un assemblage sur site comme cela est le cas selon le procédé de l'invention. Les températures de transition vitreuse ou de fusion peuvent être mesurées par les méthodes bien connues de l'homme du métier. De préférence, ces températures sont mesurées par Calorimétrie Différentielle à Balayage selon les conditions spécifiées dans les normes ISO 11357-2/2013 pour la Tg et ISO 11357-3/2011 pour la Tf. En outre le polymère thermoplastique (méth)acrylique ou une partie du polymère thermoplastique (méth)acrylique possède un indice de fluage (MFI) selon l'ISO 1133 (230 °C/3,8 kg) inférieur à 20 g/10 min. De préférence, l'indice de fluage est inférieur à 18 g/10 min, plus préférablement inférieur à 16 g/10 min, avantageusement entre 0,1 g et 13 g/10 min.

Comme cela sera détaillé par la suite, la matrice de polymère thermoplastique (méth)acrylique peut être obtenue à partir de la polymérisation d'une composition liquide (méth)acrylique comprenant un monomère (méth)acrylique ou un mélange de monomères (méth)acryliques, un polymère (méth)acrylique et au moins un amorceur radicalaire.

La matrice de polymère thermoplastique (méth)acrylique est formée de polymères thermoplastiques (méth)acryliques mais elle peut comprendre en outre **un ou plusieurs additifs et/ou une ou plusieurs charges.**

Les **charges carbonées** peuvent être en particulier du charbon actif, de l'anthracite naturel, de l'anthracite synthétique, du noir de carbone, du graphite naturel, du graphite synthétique, des nanocharges carbonées ou leurs mélanges. Elles sont de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée. Elles peuvent permettre alors une réduction accrue des temps de cycle ou faciliter l'assemblage, l'ajustement ou la réparation sur le site d'installation.

Les **charges minérales** comprennent notamment les hydroxydes métalliques, qui se présentent plus particulièrement sous forme de trihydate d'alumine (Al(OH)₃) ou d'hydroxyde de magnésium (Mg(OH)) et les nanocharges minérales telles que le carbonate de calcium, le dioxyde de titane ou la silice.

En tant **qu'additifs,** il est possible de mentionner les additifs organiques tels que les modificateurs de la résistance aux impacts ou les copolymères séquencés, les stabilisateurs thermiques, les stabilisateurs UV, les lubrifiants, modificateurs de viscosité, les modificateurs de pH (soude), les modificateurs de granulométrie (sulfate de sodium), les biocides, et leurs mélanges. Ces additifs permettent d'améliorer notamment les propriétés rhéologiques, chimiques et d'adhérence de la matrice de polymère thermoplastique (méth)acrylique.

Le pourcentage massique de l'ensemble des additifs et des charges par rapport au poids total de matrice de polymère thermoplastique (méth)acrylique est de préférence inférieur à 30%, de préférence inférieur à 10%.

Le renfort fibreux se rapporte généralement à plusieurs fibres, des stratifils unidirectionnels ou un mat à filament continu, des tissus, des feutres ou des non-tissés qui peuvent être sous la forme de bandes, nappes, tresses, mèches ou pièces. Plus particulièrement, un renfort fibreux comprend un assemblage d'une ou plusieurs fibres, généralement plusieurs fibres, ledit assemblage pouvant avoir différentes formes et dimensions, unidimensionnelles, bidimensionnelles ou tridimensionnelles. La forme unidimensionnelle correspond à des fibres longues linéaires. Les fibres peuvent être discontinues ou continues. Les fibres peuvent être agencées de façon aléatoire ou de façon parallèle les unes aux autres, sous la forme d'un filament continu. La forme bidimensionnelle correspond à des mats fibreux ou des renforts non tissés ou des stratifils tissés ou des faisceaux de fibres, qui peuvent également être tressés. Même si la forme bidimensionnelle a une certaine épaisseur et, par conséquent, en principe une troisième dimension, elle est considérée comme étant bidimensionnelle selon la présente invention. La forme tridimensionnelle correspond, par exemple, à des mats ou des renforcements fibreux non-tissés ou des faisceaux empilés ou pliés de fibres ou des mélanges de ceux-ci, un assemblage de la forme bidimensionnelle dans la troisième dimension.

Les fibres peuvent être discontinues ou continues. Lorsque les fibres sont continues, leur assemblage forme des tissus. De façon préférée, le renfort fibreux est à base de fibres continues. Une fibre est définie par son facteur de forme, qui est le rapport entre la longueur et le diamètre de la fibre. Les fibres utilisées dans la présente invention sont des fibres longues obtenues à partir de fibres continues ou des fibres continues. Les fibres présentent un rapport de forme d'au moins 1000, de préférence au moins 1500, plus préférablement au moins 2000, avantageusement au moins 3000 et plus avantageusement au moins 5000, encore plus avantageusement au moins 6000, encore plus avantageusement au moins 7500 et le plus avantageusement au moins 10 000. Les fibres continues présentent un rapport de forme d'au moins 1000. Les dimensions d'une fibre peuvent mesurées par les méthodes bien connues de l'homme du métier. De préférence, ces dimensions sont mesurées par microscopie selon la norme ISO 137.

Les origines des fibres constituant le renfort fibreux peuvent être naturelles ou synthétiques. En tant que matériau naturel, on peut mentionner des fibres végétales, des fibres de bois, des fibres animales ou des fibres minérales. Des fibres végétales sont, par exemple, des fibres de sisal, jute, chanvre, lin, coton, noix de coco, et des fibres de banane. Des fibres animales sont, par exemple, de la laine ou des poils. Les fibres minérales peuvent également être choisies parmi des fibres de verre, en particulier de type E, R ou S2, des fibres de basalte, des fibres de carbone, des fibres de bore ou des fibres de silice.

En tant que matériau synthétique, il peut être mentionné des fibres polymères choisies parmi des fibres de polymères thermodurcissables, de polymères thermoplastiques ou des mélanges de ceux-ci. Les fibres polymères peuvent être constituées de polyamide (aliphatique ou aromatique), polyester, alcool polyvinylique, polyoléfines, polyuréthanes, chlorure de polyvinyle, polyéthylène, polyesters insaturés, résines époxyde et esters vinyliques.

De préférence, le renfort fibreux de la présente invention comporte des fibres végétales, des fibres de bois, des fibres animales, des fibres minérales, des fibres polymères synthétiques, des fibres de verre, des fibres de basalte et des fibres de carbone, seules ou en mélange. De façon plus préférée, le renfort fibreux de la présente invention comporte des fibres de carbone et/ou des fibres de verre. De façon plus préférée, le renfort fibreux de la présente invention consiste essentiellement en des fibres naturelles (végétales ou bois), des fibres de carbone ou des fibres de verre.

Les fibres du renfort fibreux ont par exemple un diamètre compris entre 0,005 µm et 100 µm, de préférence entre 1 µm et 50 µm, plus préférablement entre 5 µm et 30 µm et avantageusement, entre 10 µm et 25 µm.

De préférence, les fibres du renfort fibreux de la présente invention sont choisies parmi des fibres continues pour la forme unidimensionnelle, ou parmi les fibres longues ou continues pour la forme bidimensionnelle ou tridimensionnelle du renfort fibreux.

Comme cela est présenté en figure 1, **une première étape optionnelle de fabrication 110** d'au moins deux pièces 10 en composite polymère thermoplastique (méth)acrylique, peut comprendre les sous étapes suivantes :
- imprégnation 111 d'un renfort fibreux avec une composition liquide (méth)acrylique,
- polymérisation 112 de la composition liquide (méth)acrylique, imprégnant ledit renfort fibreux.

Un des avantages de la présente invention est que les pièces 10 en composite polymère thermoplastique peuvent être fabriquées à une température inférieure à 150°C, de préférence inférieure à 140°C, de façon encore plus préférée inférieure à 125°C, de façon avantageuse inférieure à 120°C, de façon plus avantageuse inférieure à 110°C et de façon encore plus avantageuse inférieure à 100°C. Par exemple, l'étape d'imprégnation du renfort fibreux avec la composition liquide (méth)acrylique est réalisée à une température inférieure à 150°C, de préférence inférieure à 120°C, de façon encore plus préférée inférieure à 100°C ou inférieure à 80°C. En effet, la composition liquide (méth)acrylique, utilisée pour la fabrication des pièces 10 en composite polymère thermoplastique, est liquide à une température bien inférieure aux températures de fusion classiques des thermoplastiques classiques. Ainsi, cela permet de réaliser les pièces 10 en composite polymère thermoplastique qui sont de très grande dimension sans avoir à mettre en œuvre des procédés où lesdites pièces sont chauffées à des températures élevées. Ainsi, il faut comprendre que les procédés pouvant être utilisés pour fabriquer ces pièces ne nécessitent pas une étape de chauffage à une température élevée comme cela aurait pu être le cas avec un thermoplastique classique.

L'étape 110 de fabrication de pièce 10 en composite polymère thermoplastique peut également comprendre une sous-étape 113 de dépôt d'une couche 13 de polymère thermoplastique (méth)acrylique. Ce dépôt peut être de préférence au niveau d'une zone d'interface d'assemblage destinée à former la future interface soudée. Alternativement, le dépôt est réalisé sur l'intégralité de la pièce 10 en composite polymère thermoplastique.

En ce qui concerne l'étape 110 de fabrication de pièces 10 en composite polymère thermoplastique, différents procédés peuvent être utilisés pour fabriquer ces pièces. Il peut être mentionné l'infusion de résine assistée par le vide (VARI), la pultrusion, le moulage par infusion sous vide, le moulage par infusion sous pression, le moulage à l'autoclave, le moulage par transfert de résine (RTM) et des variantes de celui-ci telles que (HP-RTM, C-RTM, I-RTM), le moulage par réaction-injection (RIM), le moulage par réaction-injection renforcée (R-RIM) et des variantes de celui-ci, le moulage à la presse, le moulage par compression, le moulage par compression de liquide (LCM) ou le moulage en feuille (SMC) ou le moulage en vrac (BMC).

Un premier procédé de fabrication préféré pour fabriquer des pièces 10 en composite polymère thermoplastique est un procédé selon lequel la composition liquide (méth)acrylique est transférée sur le renfort fibreux par imprégnation du renfort fibreux dans un moule. Les procédés nécessitant un moule sont énumérés ci-dessus et comprennent le mot moulage.

Un deuxième procédé de fabrication préféré pour fabriquer des pièces 10 en composite polymère thermoplastique sont des procédés selon lesquels la composition liquide est utilisée dans le procédé de pultrusion. Les fibres sont guidées par l'intermédiaire d'un lot de résine comprenant la composition selon l'invention. Les fibres sous forme de renfort fibreux sont, par exemple, sous la forme d'un stratifil unidirectionnel ou un mat de filament continu. Après imprégnation dans le lot de résine, les fibres mouillées sont tirées à travers une filière chauffée, où la polymérisation se produit.

Un troisième procédé de fabrication préféré est l'infusion de résine assistée par le vide (VARI).

Le procédé de fabrication de pièces 10 en composite polymère thermoplastique, mais également de pièces ou produits mécaniques ou structurés, peut comprendre en outre l'étape de post-formage. Le post-formage comprend une flexion ainsi qu'une modification de la forme de la pièce composite. Le procédé de fabrication de pièces 10 en composite polymère thermoplastique peut comprendre en outre une étape de laminage.

Les pièces thermoplastiques obtenues par les procédés selon l'invention peuvent être post-formées après polymérisation de la composition liquide de l'invention. Le formage comprend une flexion ainsi qu'une modification de la forme de la pièce composite.

**En ce qui concerne la composition liquide (méth)acrylique,** elle peut comprendre un monomère (méth)acrylique, un polymère (méth)acrylique précurseur et un amorceur radicalaire tel que cela est décrit dans WO2013/056845 et WO2014/013028.

En outre, pendant l'imprégnation, lors de la préparation de composite polymère, la viscosité de la composition liquide (méth)acrylique, ou sirop d'imprégnation, doit être régulée et adaptée de manière à ne pas être trop fluide ou trop visqueux, afin d'imprégner correctement chaque fibre du renfort fibreux. Lorsque le mouillage est partiel, soit parce que le sirop est trop fluide ou trop visqueux, des zones « nues », c'est-à-dire des zones non imprégnées, et des zones dans lesquelles des gouttes de polymère se forment sur les fibres, qui sont la cause de la formation de bulles, respectivement, apparaissent. Ces zones « nues » et ces bulles conduisent à l'apparition de défauts dans la pièce en composite polymère ou l'objet en composite polymère final, qui sont la cause, entre autres, d'une perte de résistance mécanique de la pièce en composite polymère ou de l'objet en composite polymère final. De plus, en cas d'utilisation sans imprégnation, il est souhaitable de disposer d'une composition liquide qui polymérise rapidement avec une bonne conversion afin d'augmenter la productivité.

Ainsi, ladite composition liquide (méth)acrylique présente de préférence une viscosité dynamique comprise entre 10 mPa*s et 10 000 mPa*s à 25 °C. La viscosité dynamique de la composition liquide ou du sirop (méth)acrylique est dans une plage de 10 mPa*s à 10000 mPa*s, de préférence de 20 mPa*s à 7000 mPa*s et avantageusement de 20 mPa*s à 5000 mPa*s. La viscosité de la composition liquide (méth)acrylique, ou sirop (méth)acrylique liquide, peut être aisément mesurée avec un rhéomètre ou un viscosimètre. La viscosité dynamique est mesurée à 25 °C. Si le sirop (méth)acrylique liquide présente un comportement newtonien, c'est-à-dire sans fluidification par cisaillement, la viscosité dynamique est indépendante du cisaillement dans un rhéomètre ou de la vitesse du mobile dans un viscosimètre. Si la composition liquide présente un comportement non newtonien, c'est-à-dire avec fluidification par cisaillement, la viscosité dynamique est mesurée à un taux de cisaillement de 1s⁻¹ à 25 °C.

La composition liquide (méth)acrylique comprend d'au moins un monomère (méth)acrylique ou un mélange des monomères (méth)acryliques, un polymère (méth)acrylique précurseur.

Le monomère (méth)acrylique ou le mélange des monomères (méth)acryliques dans la composition liquide (méth)acrylique ou le sirop (méth)acrylique liquide sont présents à hauteur d'au moins 40 % en poids, de préférence d'au moins 45 % en poids, de plus préféré d'au moins 50 % en poids, avantageusement d'au moins 60 % en poids et plus avantageusement d'au moins 65 % en poids la composition liquide (méth)acrylique.

Le polymère (méth)acrylique précurseur dans la composition liquide (méth)acrylique ou le sirop (méth)acrylique liquide est présent à hauteur d'au moins 10 % en poids, de préférence d'au moins 15 %, avantageusement d'au moins 18 % et plus avantageusement d'au moins 20 % en poids dans la composition liquide (méth)acrylique.

Le polymère (méth)acrylique précurseur dans la composition liquide (méth)acrylique ou le sirop (méth)acrylique liquide est présent à hauteur d'au plus 60 % en poids, de préférence d'au plus 50 %, avantageusement d'au plus 40 % et plus avantageusement d'au plus 35 % en poids dans la composition liquide (méth)acrylique.

La composition liquide (méth)acrylique ou le sirop, les composés du sirop sont incorporés dans les pourcentages en masse suivante :
- le monomère (méth)acrylique dans la composition liquide ou le sirop (méth)acrylique sont présents dans des proportions comprises entre 40 % et 90 % en poids et de préférence entre 45 % et 85 % en poids de la composition consistant en le monomère (méth)acrylique et le polymère (méth)acrylique,
- le polymère (méth)acrylique dans la composition liquide ou le sirop (méth)acrylique sont présents dans des proportions comprises entre 10 % et 60 % en poids et avantageusement entre 15 % et 55 % en poids de la composition consistant en le(s) monomère (méth)acrylique et le polymère (méth)acrylique, de façon préférée, le polymère (méth)acrylique dans la composition liquide est présent dans des proportions comprises entre 18 % et 30 %, de façon plus préférée entre 20 et 25 % en poids de la composition consistant en le monomère (méth)acrylique et le polymère (méth)acrylique.

**Le monomère (méth)acrylique,** le monomère est choisi parmi l'acide acrylique, l'acide méthacrylique, des monomères alkylacryliques, des monomères alkylméthacryliques, des monomères hydroxyalkylacryliques et des monomères hydroxyalkylméthacryliques, et des mélanges de ceux-ci.

De préférence, le monomère (méth)acrylique est choisi parmi l'acide acrylique, l'acide méthacrylique, des monomères hydroxyalkylacryliques, des monomères hydroxyalkylméthacryliques, des monomères alkylacryliques, des monomères alkylméthacryliques et des mélanges de ceux-ci, le groupe alkyle contenant de 1 à 22 carbones linéaires, ramifiés ou cycliques ; le groupe alkyle contenant de préférence de 1 à 12 carbones linéaires, ramifiés ou cycliques.

Avantageusement, le monomère (méth)acrylique est choisi parmi les méthacrylate de méthyle, méthacrylate d'éthyle, acrylate de méthyle, acrylate d'éthyle, acide méthacrylique, acide acrylique, acrylate de n-butyle, acrylate d'isobutyle, méthacrylate de n-butyle, méthacrylate d'isobutyle, acrylate de cyclohexyle, méthacrylate de cyclohexyle, acrylate d'isobornyle, méthacrylate d'isobornyle, acrylate d'hydroxyéthyle et méthacrylate de hydroxyéthyle, et des mélanges de ceux-ci.

Selon un mode de réalisation préféré, au moins 50 % en poids et de préférence au moins 60 % en poids du monomère (méth)acrylique est du méthacrylate de méthyle.

Selon un premier mode de réalisation plus préféré, au moins 50 % en poids, de préférence au moins 60 % en poids, plus préférablement au moins 70 % en poids, avantageusement au moins 80 % en poids et encore plus avantageusement 90 % en poids du monomère est un mélange de méthacrylate de méthyle avec facultativement au moins un autre monomère.

**En ce qui concerne le polymère (méth)acrylique précurseur,** il peut être mentionné des méthacrylates de polyalkyle ou des acrylates de polyalkyle. Selon un mode de réalisation préféré, le polymère (méth)acrylique est le poly(méthacrylate de méthyle) (PMMA).

Selon un mode de réalisation, l'homo- ou copolymère de méthacrylate de méthyle (MMA) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et au moins un copolymère de MMA, ou un mélange d'au moins deux homopolymères ou deux copolymères de MMA avec un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 % à 30 % en poids d'au moins un monomère contenant au moins une insaturation éthylénique qui peut copolymériser avec le méthacrylate de méthyle.

Ces monomères sont bien connus et il peut être particulièrement mentionné les acides acrylique et méthacrylique et des (méth)acrylates d'alkyle dans lesquels le groupe alkyle contient de 1 à 12 atomes de carbone. À titre d'exemples, il peut être mentionné l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un premier mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle et l'acrylate d'éthyle, et des mélanges de ceux-ci.

La masse moléculaire moyen en poids (M_{w} - abréviation en anglais) du polymère (méth)acrylique précurseur doit être élevé, c'est-à-dire supérieur à 50 000 g/mol et de préférence supérieur à 100 000 g/mol. Le poids moléculaire moyen en poids peut être mesuré par chromatographie d'exclusion stérique.

Le polymère (méth)acrylique précurseur est totalement soluble dans le monomère (méth)acrylique ou dans le mélange de monomères (méth)acryliques. Il permet que la viscosité du monomère (méth)acrylique ou du mélange de monomères (méth)acryliques soit augmentée. La composition liquide ou solution obtenue est généralement appelée « sirop » ou « prépolymère ». La valeur de viscosité dynamique du sirop (méth)acrylique liquide est comprise entre 10 mPa.s et 10 000 mPa.s. La viscosité du sirop peut être aisément mesurée avec un rhéomètre ou un viscosimètre. La viscosité dynamique est mesurée à 25°C. Avantageusement, le sirop (méth)acrylique liquide ne contient aucun solvant additionnel ajouté volontairement.

**En ce qui concerne l'amorceur radicalaire, il peut être mentionné** des amorceurs de polymérisation radicalaires de préférence hydrosolubles ou des amorceurs de polymérisation radicalaires liposolubles ou partiellement liposolubles.

Les amorceurs de polymérisation radicalaires hydrosolubles sont notamment les persulfates de sodium, de potassium ou d'ammonium, utilisés seuls ou en présence d'agents réducteurs tels que les métabisulfites ou hydrosulfites de sodium, le thiosulfate de sodium, le formaldéhyde sulfoxylate de sodium, un mélange de sel disodique de 2-hydroxy-2-sulfinoacide acétique, de sulfite de sodium et de sel disodique de 2-hydroxy-2-sulfoacide acétique ou encore un mélange de sel disodique de l'hydroxysulfino d'acide acétique et de sel disodique de l'hydroxysulfo d'acide acétique.

Les amorceurs de polymérisation radicalaires liposolubles ou partiellement liposolubles sont notamment des peroxydes ou hydroperoxydes et des dérivés de 1 ' azobisisobutyronitrile. Les peroxydes ou hydroperoxydes sont utilisés en combinaison avec les agents réducteurs décrits précédemment de façon à baisser leur température d'activation.

Le pourcentage massique d'amorceur par rapport au poids total de mélange de monomères est de préférence compris entre 0,05% en poids et 3% en poids, de préférence entre 0,1% en poids et 2% en poids.

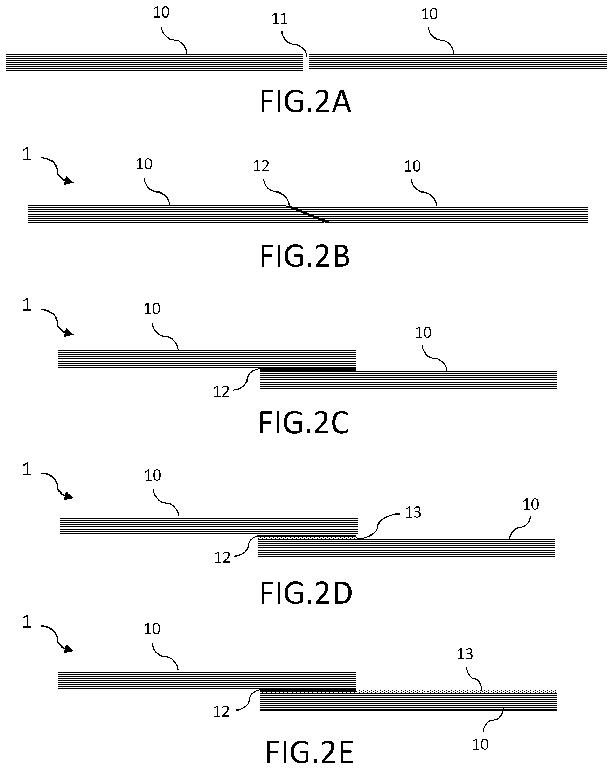

**L'étape de disposition 120** des deux pièces 10 en composite polymère thermoplastique de manière adjacente ou se chevauchant au niveau d'une zone d'interface d'assemblage 11 est illustrée aux figures 2. Ainsi, la figure 2A présente deux pièces 10 en composite polymère thermoplastique positionnées de manière adjacente et séparées par une zone d'interface d'assemblage 11. Les extrémités des pièces en composite polymère thermoplastique sont positionnées de manière adjacente de façon à former la zone d'interface d'assemblage 11. Comme cela est présenté à la figure 2B, les extrémités peuvent être formées par une section transversale des pièces 10 en composite polymère thermoplastique de façon à former une interface soudée 12 transversale.

Comme cela est présenté aux figures 2C à 2E, les pièces 10 en composite polymère thermoplastique peuvent également être positionnées de façon à se chevaucher et donc à créer une zone de recouvrement correspondant à la future interface soudée 12 telle que représentée sur ces figures.

En outre, les pièces 10 en composite polymère thermoplastique peuvent comporter une couche 13 de polymère thermoplastique (méth)acrylique. Comme évoqué précédemment cette couche 13 peut être de préférence positionnée au niveau d'une zone d'interface d'assemblage destinée à former la future interface soudée 12 (Fig. 2D). Alternativement, le dépôt de la couche 13 est réalisé sur l'intégralité de la pièce 10 en composite polymère thermoplastique comme cela est présenté en figure 2E. Ledit dépôt permet en particulier d'obtenir une couche 13 de polymère thermoplastique (méth)acrylique d'au moins 0,5 mm d'épaisseur sur la surface destinée à être soudée.

En particulier, l'interface soudée ou de soudage 12 présente une épaisseur supérieure ou égale à 1 mm, de préférence supérieure ou égale à 2 mm. L'épaisseur de l'interface soudée 12 peut être mesurée par des méthodes conventionnelles par exemple à partir d'une coupe verticale de ladite interface soudée 12.

Les figures 2A à 2E ne représentent qu'une vue en coupe de l'interface soudée 12 mais cette dernière s'étend de préférence sur une longueur importante des pièces 10 en composite polymère thermoplastique. Ainsi, l'interface soudée 12 peut présenter une longueur supérieure à 1 mètre, de préférence supérieure à 5 mètres et de façon encore plus préférée, supérieure à 10 mètres. En outre, le procédé selon l'invention est particulièrement bien adapté à des pièces 10 en composite polymère thermoplastique de grande taille. Ainsi de façon préférée, au moins une des deux pièces 10 en composite polymère thermoplastique comporte une dimension supérieure à 1 mètre, de préférence supérieure à 2 mètres.

**L'étape de chauffage 130** permet de faire fondre la matrice de polymère thermoplastique (méth)acrylique au niveau de ladite zone d'interface d'assemblage 11 de façon à former un objet 1 en composite polymère thermoplastique comportant une interface soudée 12. La matrice de polymère thermoplastique (méth)acrylique peut être fondue par une technique sélectionnée parmi : le soudage par ultrasons, le soudage par induction, le soudage par fil résistif, le soudage par friction-agitation, le soudage au laser, le chauffage par infrarouge ou par rayonnement ultraviolet. De préférence, la matrice de polymère thermoplastique (méth)acrylique est fondue par soudage par fil résistif.

Le soudage selon l'invention peut être réalisé avec ou sans apport de matière polymère thermoplastique (méth)acrylique d'apport. En effet, lors du chauffage, un apport de matière polymère thermoplastique (méth)acrylique peut être réalisé par exemple sous la forme d'une baguette en polymère thermoplastique (méth)acrylique. Cela est avantageux lorsqu'un creux ou un espace vide est formé est formé lors de l'étape 120 de disposition des deux pièces de composite polymère thermoplastique. L'apport de matériau thermoplastique de remplissage, via la baguette en polymère thermoplastique (méth)acrylique, permet de combler d'éventuels creux ou espace.

De façon préférée, lors de l'étape de chauffage 230, la température au niveau de l'interface d'assemblage 11 est comprise entre 160°C et 300°C. Cette température peut être mesurée classiquement par thermomètre infrarouge.

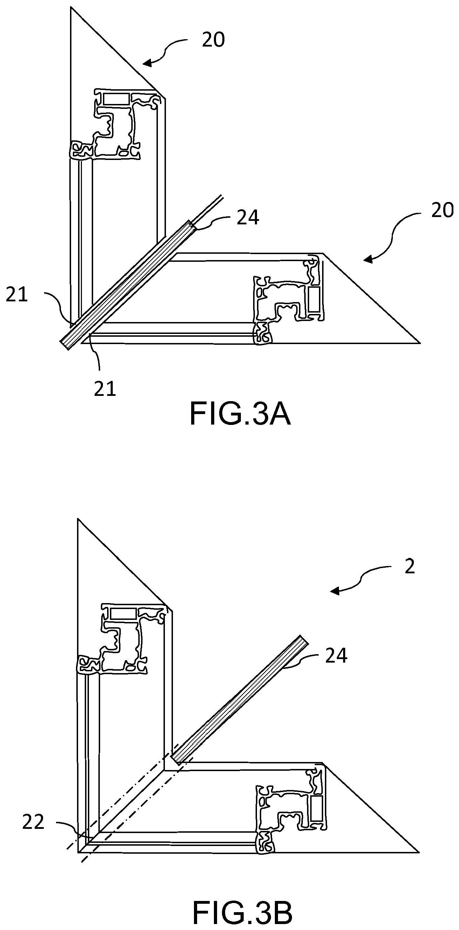

Les figures 3A, 3B représentent deux illustrations simplifiées en vue du dessus d'une coupe longitudinale de deux pièces 20 d'un profilé de fenêtre assemblées conformément au procédé selon l'invention. Dans la figure 3A, les deux pièces 20 d'un profilé de fenêtre en composite polymère thermoplastique sont séparées par un miroir chauffant 24 (hot plate). Lorsque la température de fusion est atteinte, le miroir chauffant 24 est retiré et les deux pièces 20 d'un profilé de fenêtre en composite polymère thermoplastique sont mises en contact (cf. Fig.3B) l'une avec l'autre de façon à former le profilé de fenêtre 2 en composite polymère thermoplastique comportant une interface soudée 22.

**L'étape optionnelle d'application 140 d'une pression** comporte la génération d'une pression au niveau de l'interface d'assemblage 11. Cette pression, réalisée après l'étape de chauffage 130, permet de renforcer l'interface soudée entre les au moins deux pièces 10 en composite polymère de façon à former un objet en composite polymère thermoplastique comportant une interface soudée 12. Les deux pièces 10 en composite polymère thermoplastique peuvent également être solidement fixées ensemble dans la position ou la forme souhaitée et maintenues jusqu'à ce que la matrice polymère thermoplastique ait refroidi, formant ainsi une interface soudée 12 ferme. La pression peut par exemple être réalisée par l'application d'un vide d'air partiel au niveau de la zone d'assemblage 11 des au moins deux pièces 10 en composite polymère thermoplastique. La pression peut également réaliser par l'application d'une force sensiblement perpendiculaire à la zone d'interface d'assemblage 11 par exemple via le dépôt d'un gabarit sur les au moins deux pièces en composite polymère thermoplastique.

**L'étape optionnelle de refroidissement 150** permet d'améliorer les propriétés mécaniques de l'interface soudée 12. Cette étape de refroidissement 150 peut être réalisée à température ambiante (e.g. entre 15°C et 25°C) ou bien à une température inférieure à la Tg du polymère thermoplastique (méth)acrylique.

**Selon un deuxième aspect, la présente invention concerne un objet en composite polymère thermoplastique** fabriqué à partir au moins deux pièces 10 en composite polymère thermoplastique. Comme mentionné précédemment, le composite polymère thermoplastique comporte un renfort fibreux et une matrice de polymère thermoplastique (méth)acrylique et les au moins deux pièces 10 en composite polymère thermoplastique sont reliées par une interface soudée 12. Des objets en composite polymère thermoplastique selon l'invention peuvent être utilisés dans de nombreux domaine et de préférence dans les domaines du bâtiment, de l'aéronautique, nautique, automobile et loisir. Ainsi, objet en composite polymère thermoplastique selon l'invention peut être, de préférence, sélectionné parmi un revêtement constitué d'une pluralité de panneaux, un garde-corps, un profilé de fenêtre, le fuselage d'un aéronef, des renforts pour la construction, une traverse (notamment de véhicule), une pièce de caisse en blanc d'un véhicule, une nacelle, un empennage, une dérive, un aileron, un volet, une pale d'hydrolienne, une coque, un pont, une cloison de bateau, des pièces d'habillages (capotage) pour automobile.

Dans la suite de la description, trois autres exemples d'objets sont donnés

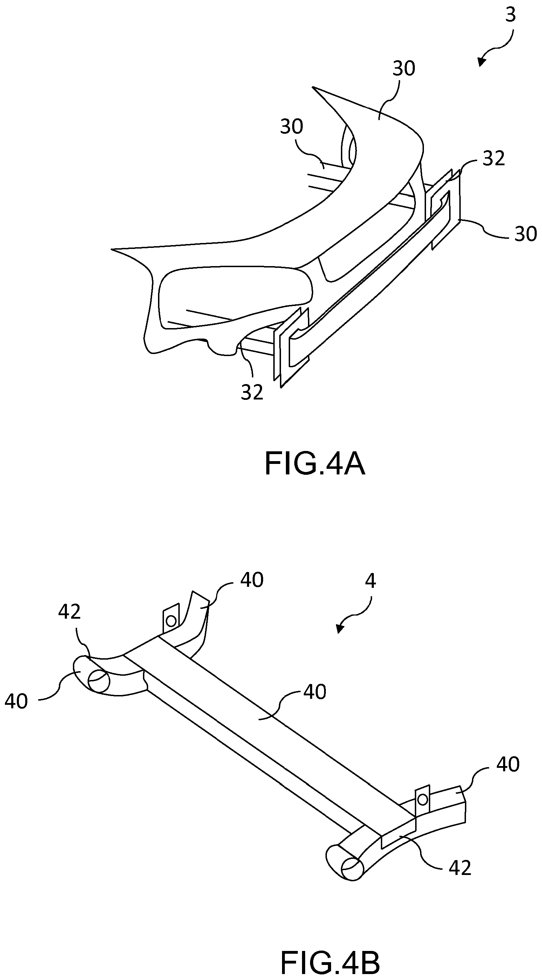

Les figures 4A et 4B représentent des objets 3, 4 en composite polymère thermoplastique selon l'invention. La figures 4A représente une traverse 3 de type renfort de pare chocs pour véhicule automobile en composite polymère thermoplastique selon l'invention comportant des interfaces de soudage 32. Ces pièces 30 en composite polymère thermoplastique forment des éléments de structure d'un véhicule et sont reliées par plusieurs interfaces de soudage 32. L'invention ne se limite pas ces pièces 30 particulières mais pourrait également être mise en œuvre dans la fabrication d'autres pièces constituant par exemple la caisse du véhicule telles que les côtés, les planchers, les ailes, les portières, la traverse 40 reliant les trains arrière comme cela est représenté en figure 4B.

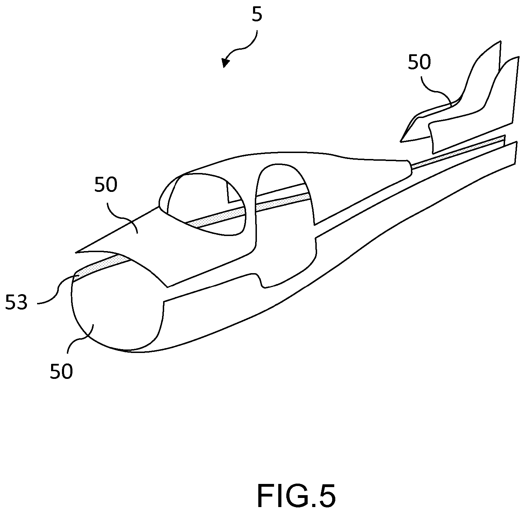

La figure 5 représente quant à elle une partie de fuselage 5 d'un aéronef comportant plusieurs pièces 50 de fuselage en composite polymère thermoplastique dont certaines comportent une couche 53 de polymère thermoplastique (méth)acrylique.

En outre, de façon préférée, l'objet 1, 2, 3, 4, 5 en composite polymère thermoplastique selon l'invention ne comprend pas plus de 50 % en poids, de façon plus préférée pas plus de 40 % en poids, de façon plus préférée pas plus de 30 % en poids, de façon avantageuse pas plus de 20 % en poids, de façon plus avantageuse pas plus de 15 % en poids et de façon encore plus avantageuse pas plus de 10 % en poids de polymères thermodurcissables tel que des résines époxydes ou polyesters ou polyuréthannes. Or jusqu'ici, les polymères thermodurcissables ont généralement été utilisés dans la fabrication des objets 1 en composite polymère. De même, de façon préférée, l'objet 1 en composite polymère thermoplastique selon l'invention ne comprend pas plus de 10 % en poids, de façon plus préférée pas plus de 9 % en poids et de façon encore plus préférée pas plus de 8 % en poids, de façon avantageuse pas plus de 7 % en poids, de façon plus avantageuse pas plus de 6 % en poids et de façon encore plus avantageuse pas plus de 5 % en poids de colles, de préférence de colles thermodurcissables. En effet, le collage des différentes pièces d'objets en composite polymère est généralement réalisé avec de la colle structurelle thermodurcissable de type résine époxyde.

De façon préférée, le composite polymère thermoplastique d'une pièce 10, 20, 30, 40, 50 selon l'invention est recouvert au moins partiellement d'une couche de polymère thermoplastique (meth)acrylique d'au moins 0,5 mm, de préférence d'au moins 1 mm, de façon plus préférée d'au moins 2 mm d'épaisseur par exemple sur une surface destinée à être soudée. Le composite polymère est plus particulièrement recouvert de cette couche de polymère thermoplastique (meth)acrylique au niveau d'une zone d'interface d'assemblage destinée à former la future interface soudée 12. Cela permet notamment d'éviter l'apparition de zones à moindre concentration en polymère thermoplastique. Alternativement, la pièce 10, 20, 30, 40, 50 en composite polymère thermoplastique peut présenter au moins une face recouverte de la couche de polymère thermoplastique (méth)acrylique.

De façon particulièrement avantageuse, l'objet 1, 2, 3, 4, 5 en composite polymère selon l'invention comporte une interface soudée 12, 22, 32, 42 présentant une longueur supérieure à 1 mètre, de préférence supérieure à 5 mètres.

Dans le cadre de l'invention, l'utilisation de pièces 10 en composite polymère thermoplastique, comportant un renfort fibreux et une matrice de polymère thermoplastique (méth)acrylique permet de réduire significativement la quantité de polymère thermodurcissable utilisée dans les objets 1, 2, 3, 4, 5 en composite polymère et ouvre des possibilités non envisageables avec des thermodurcissable telles qu'un recyclage d'une majorité de l'objet 1, 2, 3, 4, 5 en composite polymère thermoplastique, ainsi que des assemblages ou des réparations facilités.

## Revendications

1. Procédé (100) de fabrication d'un objet (1) en composite polymère thermoplastique, à partir d'au moins deux pièces (10) en composite polymère thermoplastique (méth)acrylique, ledit composite polymère thermoplastique comportant un renfort fibreux et une matrice de polymère thermoplastique, ledit procédé comprenant les étapes de :
- fabrication (110) d'au moins deux pièces (10) en composite polymère thermoplastique (méth)acrylique, comportant un renfort fibreux et une matrice de polymère thermoplastique (méth)acrylique à une température inférieure à 150°C, ladite étape de fabrication (110) d'au moins deux pièces (10) en composite polymère thermoplastique (méth)acrylique, comprend les sous-étapes suivantes :
∘ imprégnation (111) d'un renfort fibreux avec une composition liquide (méth)acrylique,
∘ polymérisation (112) de la composition liquide (méth)acrylique,
- disposition (120) des deux pièces (10) en composite polymère thermoplastique (méth)acrylique de manière adjacente ou se chevauchant au niveau d'une zone d'interface d'assemblage (11), et
- chauffage (130) pour faire fondre la matrice de polymère thermoplastique(méth)acrylique au niveau de ladite zone d'interface d'assemblage (11), de façon à former un objet (1) en composite polymère thermoplastique comportant une interface soudée (12).

2. Procédé de fabrication selon la revendication 1, **caractérisé en ce que** le renfort fibreux est à base de fibres présentant un rapport de forme d'au moins 1000..

3. Procédé de fabrication selon l'une des revendications 1 ou 2, **caractérisé en ce que** la composition liquide (méth)acrylique présente une viscosité dynamique comprise entre 10 mPa*s et 10 000 mPa*s à 25 °C..

4. Procédé de fabrication selon l'une quelconque des revendications 1 à 3, **caractérisé en ce qu'**il comporte en outre, après l'étape de chauffage (130) une étape d'application (140) d'une pression à l'interface pour souder ensemble les au moins deux pièces (10) en composite polymère thermoplastique.

5. Procédé de fabrication selon l'une quelconque des revendications 3 à 4, **caractérisé en ce que** les pièces (10) en composite polymère thermoplastique sont fabriquées à une température inférieure à 100 °C.

6. Procédé de fabrication selon la revendications 5, **caractérisé en ce que** la composition liquide (méth)acrylique comprenne un monomère (méth)acrylique, un polymère (méth)acrylique précurseur et un amorceur radicalaire.

7. Procédé de fabrication selon la revendications 5, **caractérisé en ce que** la composition liquide (méth)acrylique comprenne un monomère (méth)acrylique ou un mélange des monomères (méth)acryliques, un polymère (méth)acrylique précurseur.

8. Procédé de fabrication selon les revendication 6 ou 7, **caractérisé en ce que** dans la composition liquide (méth)acrylique, les composés sont incorporés dans les pourcentages en masse suivante :
• le monomère (méth)acrylique dans la composition liquide ou le sirop (méth)acrylique sont présents dans des proportions comprises entre 40 % et 90 % en poids et de préférence entre 45 % et 85 % en poids de la composition consistant en le monomère (méth)acrylique et le polymère (méth)acrylique,
le polymère (méth)acrylique dans la composition liquide ou le sirop (méth)acrylique sont présents dans des proportions comprises entre 10 % et 60 % en poids et avantageusement entre 15 % et 55 % en poids de la composition consistant en le(s) monomère (méth)acrylique et le polymère (méth)acrylique, de façon préférée, le polymère (méth)acrylique dans la composition liquide est présent dans des proportions comprises entre 18 % et 30 %, de façon plus préférée entre 20 et 25 % en poids de la composition consistant en le monomère (méth)acrylique et le polymère (méth)acrylique.

9. Procédé de fabrication selon l'une quelconque des revendications 1 à 8, **caractérisé en ce que** les pièces (10) en composite polymère thermoplastique sont fabriquées par moulage par injection basse pression, moulage par infusion ou par moulage de rubans pré-imprégnés de composite polymère thermoplastique (méth)acrylique.

10. Procédé de fabrication selon l'une quelconque des revendications 1 à 9, **caractérisé en ce qu'**au moins une des deux pièces (10) en composite polymère thermoplastique comporte une couche (13) de polymère thermoplastique (méth)acrylique d'au moins 0,5 mm d'épaisseur sur la surface destinée à être soudée.

11. Procédé de fabrication selon l'une quelconque des revendications 1 à 10, **caractérisé en ce que** la matrice de polymère thermoplastique est fondue (130) par une technique sélectionnée parmi : le soudage par ultrasons, le soudage par induction, le soudage par fil résistif, le soudage par friction-agitation, soudage au laser, le chauffage par infrarouge ou par rayonnement ultraviolet, et de préférence par soudage par fil résistif.

12. Procédé de fabrication selon l'une quelconque des revendications 1 à 11, **caractérisé en ce qu'**au moins une des deux pièces (10) en composite polymère thermoplastique comporte au moins un filament résistif positionné au niveau de l'interface d'assemblage (11).

13. Objet (1) en composite polymère fabriqué selon le procédé selon l'une quelconque des revendications 1 à 12, à partir d'au moins deux pièces (10) en composite polymère thermoplastique (méth)acrylique **caractérisé en ce que** ledit composite polymère thermoplastique comporte un renfort fibreux et une matrice de polymère thermoplastique, de préférence (méth)acrylique, et **en ce que** les au moins deux pièces (10) en composite polymère thermoplastique (méth)acrylique sont reliées par une interface soudée (12).

14. Objet en composite polymère selon la revendication 13, **caractérisé en ce qu'**il ne comprend pas plus de 50 %, de préférence pas plus de 30%, en poids de polymère thermodurcissable.

15. Objet en composite polymère selon la revendication 13, **caractérisé en ce qu'**il ne comprend pas plus de 15 %, de préférence pas plus de 10%, en poids de polymère thermodurcissable.

16. Objet en composite polymère selon l'une des revendications 13 ou 14 ou 15, **caractérisé en ce qu'**il ne comprend pas plus de 10 %, de préférence pas plus de 8%, en poids de colle, de préférence de colle thermodurcissable.

17. Objet en composite polymère selon l'une des revendications 13 ou 14 ou 15, **caractérisé en ce qu'**il ne comprend pas plus de 6 %, de préférence pas plus de 5%, en poids de colle thermodurcissable.

## Patentansprüche

1. Verfahren (100) zur Herstellung eines Gegenstandes (1) aus einem thermoplastischen Polymerverbundstoff aus mindestens zwei Teilen (10) aus einem thermoplastischen (Meth)Acryl-Polymerverbundstoff, wobei der thermoplastische Polymerverbundstoff eine Faserverstärkung und eine Matrix aus einem thermoplastischen Polymer aufweist, wobei das Verfahren die folgenden Schritte umfasst:
- die Herstellung (110) von mindestens zwei Teilen (10) aus einem thermoplastischen (Meth)Acryl-Polymerverbundstoff, der eine Faserverstärkung und eine Matrix aus einem thermoplastischen (Meth)Acryl-Polymer aufweist, bei einer Temperatur von weniger als 150 °C, wobei der Schritt zur Herstellung (110) von mindestens zwei Teilen (10) aus einem thermoplastischen (Meth)Acryl-Polymerverbundstoff die folgenden Teilschritte umfasst:
∘ das Tränken (111) einer Faserverstärkung mit einer flüssigen (Meth)Acryl-Zusammensetzung,
∘ das Polymerisieren (112) der flüssigen (Meth)Acryl-Zusammensetzung,
- das Anordnen (120) der zwei Teile (10) aus einem thermoplastischen (Meth)Acryl-Polymerverbundstoff nebeneinander oder überlappend im Bereich einer Montage-Kontaktflächenzone (11) und
- das Erwärmen (130) zum Schmelzen der Matrix aus einem thermoplastischen (Meth)Acryl-Polymer im Bereich der Montage-Kontaktflächenzone (11), wodurch ein Gegenstand (1) aus einem thermoplastischen Polymerverbundstoff gebildet wird, der eine verschweißte Kontaktfläche (12) aufweist.

2. Herstellungsverfahren nach Anspruch 1, **dadurch gekennzeichnet, dass** die Faserverstärkung auf Fasern mit einem Aspektverhältnis von mindestens 1000 basiert.

3. Herstellungsverfahren nach einem der Ansprüche 1 oder 2, **dadurch gekennzeichnet, dass** die flüssige (Meth)Acryl-Zusammensetzung eine dynamische Viskosität bei 25 °C zwischen 10 mPa*s und 10 000 mPa*s aufweist.

4. Herstellungsverfahren nach einem der Ansprüche 1 bis 3, **dadurch gekennzeichnet, dass** es nach dem Schritt des Erwärmens (130) außerdem einen Schritt des Einwirkenlassens (140) eines Drucks auf die Kontaktfläche zum Verschweißen der mindestens zwei Teile (10) aus einem thermoplastischen Polymerverbundstoff aufweist.

5. Herstellungsverfahren nach einem der Ansprüche 3 bis 4, **dadurch gekennzeichnet, dass** die Teile (10) aus einem thermoplastischen Polymerverbundstoff bei einer Temperatur unterhalb von 100 °C hergestellt werden.

6. Herstellungsverfahren nach Anspruch 5, **dadurch gekennzeichnet, dass** die flüssige (Meth)Acryl-Zusammensetzung ein (Meth)Acrylmonomer, eine (Meth)Acrylpolymer-Vorstufe und einen Radikalinitiator umfasst.

7. Herstellungsverfahren nach Anspruch 5, **dadurch gekennzeichnet, dass** die flüssige (Meth)Acryl-Zusammensetzung ein (Meth)Acrylmonomer oder eine Mischung von (Meth)Acrylmonomeren, eine (Meth)Acrylpolymer-Vorstufe umfasst.

8. Herstellungsverfahren nach den Ansprüchen 6 oder 7, **dadurch gekennzeichnet, dass** die Verbindungen in der flüssigen (Meth)Acryl-Zusammensetzung in den folgenden Masseprozentwerten enthalten sind:
• das (Meth)Acrylmonomer in der flüssigen Zusammensetzung oder der (Meth)Acrylsirup ist in Anteilen zwischen 40 Gew.-% und 90 Gew.-% und vorzugsweise zwischen 45 Gew.-% und 85 Gew.-% der aus dem (Meth)Acrylmonomer und dem (Meth)Acrylpolymer bestehenden Zusammensetzung vorhanden,
das (Meth)Acrylpolymer in der flüssigen Zusammensetzung oder der (Meth)Acrylsirup ist in Anteilen zwischen 10 Gew.-% und 60 Gew.-% und vorteilhafterweise zwischen 15 Gew.-% und 55 Gew.-% der aus dem (Meth)Acrylmonomer und dem (Meth)Acrylpolymer bestehenden Zusammensetzung vorhanden, vorzugsweise ist das (Meth)Acrylpolymer in der flüssigen Zusammensetzung in Anteilen zwischen 18 % und 30 %, noch stärker bevorzugt zwischen 20 und 25 Gew.-% der aus dem (Meth)Acrylmonomer und dem (Meth)Acrylpolymer bestehenden Zusammensetzung, vorhanden.

9. Herstellungsverfahren nach einem der Ansprüche 1 bis 8, **dadurch gekennzeichnet, dass** die Teile (10) aus einem thermoplastischen Polymerverbundstoff durch Niederdruck-Spritzgießen, Infusionsformen oder das Formen von Bändern, die mit dem thermoplastischen (Meth)Acryl-Polymerverbundstoff vorgetränkt sind, hergestellt werden.

10. Herstellungsverfahren nach einem der Ansprüche 1 bis 9, **dadurch gekennzeichnet, dass** mindestens eines der zwei Teile (10) aus einem thermoplastischen Polymerverbundstoff eine Schicht (13) aus einem thermoplastischen (Meth)Acryl-Polymer mit einer Dicke von mindestens 0,5 mm auf der zum Verschweißen vorgesehenen Fläche aufweist.

11. Herstellungsverfahren nach einem der Ansprüche 1 bis 10, **dadurch gekennzeichnet, dass** die Matrix des thermoplastischen Polymers mittels einer Technik, die ausgewählt ist aus: dem Ultraschallschweißen, Induktionsschweißen, Widerstandsdrahtschweißen, Reibrührschweißen, Laserschweißen, Erwärmen mittels Infrarot oder Ultraviolettstrahlung und vorzugsweise mittels Widerstandsdrahtschweißen geschmolzen (130) wird.

12. Herstellungsverfahren nach einem der Ansprüche 1 bis 11, **dadurch gekennzeichnet, dass** mindestens eines der zwei Teile (10) aus einem thermoplastischen Polymerverbundstoff mindestens einen Widerstandsdraht aufweist, der im Bereich der Montage-Kontaktfläche (11) angeordnet ist.

13. Gegenstand (1) aus einem Polymerverbundstoff, der gemäß dem Verfahren nach einem der Ansprüche 1 bis 12 aus mindestens zwei Teilen (10) aus einem thermoplastischen (Meth)Acryl-Polymerverbundstoff hergestellt ist, **dadurch gekennzeichnet, dass** der thermoplastische Polymerverbundstoff eine Faserverstärkung und eine Matrix aus einem thermoplastischen Polymer, vorzugsweise (Meth)Acryl, aufweist, und dadurch, dass die mindestens zwei Teile (10) aus einem thermoplastischen (Meth)Acryl-Polymerverbundstoff durch eine verschweißte Kontaktfläche (12) verbunden sind.

14. Gegenstand aus einem Polymerverbundstoff nach Anspruch 13, **dadurch gekennzeichnet, dass** er nicht mehr als 50 Gew.-%, vorzugsweise nicht mehr als 30 Gew.-%, eines duroplastischen Polymers umfasst.

15. Gegenstand aus einem Polymerverbundstoff nach Anspruch 13, **dadurch gekennzeichnet, dass** er nicht mehr als 15 Gew.-%, vorzugsweise nicht mehr als 10 Gew.-%, eines duroplastischen Polymers umfasst.

16. Gegenstand aus einem Polymerverbundstoff nach einem der Ansprüche 13 oder 14 oder 15, **dadurch gekennzeichnet, dass** er nicht mehr als 10 Gew.-%, vorzugsweise nicht mehr als 8 Gew.-%, eines Klebstoffs, vorzugsweise eines duroplastischen Klebstoffs, umfasst.

17. Gegenstand aus einem Polymerverbundstoff nach einem der Ansprüche 13 oder 14 oder 15, **dadurch gekennzeichnet, dass** er nicht mehr als 6 Gew.-%, vorzugsweise nicht mehr als 5 Gew.-%, eines duroplastischen Klebstoffs umfasst.

## Claims

1. Process (100) for manufacturing an object (1) made of thermoplastic polymer composite from at least two parts (10) made of (meth)acrylic thermoplastic polymer composite, said thermoplastic polymer composite comprising a fibrous reinforcement and a thermoplastic polymer matrix, said process comprising the steps of:
- manufacturing (110) at least two parts (10) made of (meth)acrylic thermoplastic polymer composite, comprising a fibrous reinforcement and a matrix of (meth)acrylic thermoplastic polymer at a temperature of less than 150°C, said step (110) of manufacturing at least two parts (10) made of (meth)acrylic thermoplastic polymer composite, comprises the following sub-steps:
∘ impregnation (111) of a fibrous reinforcement with a liquid (meth)acrylic composition,
∘ polymerization (112) of the liquid (meth)acrylic composition,
- arranging (120) the two parts (10) made of (meth)acrylic thermoplastic polymer composite adjacently or overlapping at an assembly interface zone (11), and
- heating (130) to melt the (meth)acrylic thermoplastic polymer matrix at said assembly interface zone (11), so as to form an object (1) made of thermoplastic polymer composite comprising a welded interface (12).

2. Manufacturing process according to Claim 1, **characterized in that** the fibrous reinforcement is based on fibres having an aspect ratio of at least 1000.

3. Manufacturing process according to either of Claims 1 and 2, **characterized in that** the liquid (meth)acrylic composition has a dynamic viscosity of between 10 mPa*s and 10 000 mPa*s at 25°C.

4. Manufacturing process according to any one of Claims 1 to 3, **characterized in that** it also comprises, after the heating step (130), a step of applying (140) pressure at the interface in order to weld the at least two parts (10) made of thermoplastic polymer composite together.

5. Manufacturing process according to either one of Claims 3 and 4, **characterized in that** the parts (10) made of thermoplastic polymer composite are manufactured at a temperature of less than 100°C.

6. Manufacturing process according to Claim 5, **characterized in that** the liquid (meth)acrylic composition comprises a (meth)acrylic monomer, a precursor (meth)acrylic polymer and a radical initiator.

7. Manufacturing process according to Claim 5, **characterized in that** the liquid (meth)acrylic composition comprises a (meth)acrylic monomer or a mixture of (meth)acrylic monomers, a precursor (meth)acrylic polymer.

8. Manufacturing process according to Claim 6 or 7, **characterized in that**, in the liquid (meth)acrylic composition, the compounds are incorporated in the following percentages by weight:
• the (meth)acrylic monomer in the liquid composition or the (meth)acrylic syrup is present in proportions of between 40% and 90% by weight and preferably between 45% and 85% by weight of the composition consisting of the (meth)acrylic monomer and the (meth)acrylic polymer,
the (meth)acrylic polymer in the liquid composition or the (meth)acrylic syrup are present in proportions of between 10% and 60% by weight and advantageously between 15% and 55% by weight of the composition consisting of the (meth)acrylic monomer and the (meth)acrylic polymer, preferably, the (meth)acrylic polymer in the liquid composition is present in proportions of between 18% and 30%, more preferably between 20% and 25% by weight of the composition consisting of the (meth)acrylic monomer and the (meth)acrylic polymer.

9. Manufacturing process according to any one of Claims 1 to 8, **characterized in that** the parts (10) made of thermoplastic polymer composite are manufactured by low-pressure injection moulding, infusion moulding or by moulding strips pre-impregnated with (meth)acrylic thermoplastic polymer composite.

10. Manufacturing process according to any one of Claims 1 to 9, **characterized in that** at least one of the two parts (10) made of thermoplastic polymer composite comprises a layer (13) of (meth)acrylic thermoplastic polymer at least 0.5 mm thick on the surface intended to be welded.

11. Manufacturing process according to any one of Claims 1 to 10, **characterized in that** the thermoplastic polymer matrix is melted (130) by a technique selected from: ultrasonic welding, induction welding, resistance wire welding, friction stir welding, laser welding, heating by infrared or ultraviolet radiation, and preferably by resistance wire welding.

12. Manufacturing process according to any one of Claims 1 to 11, **characterized in that** at least one of the two parts (10) made of thermoplastic polymer composite comprises at least one resistive filament located at the assembly interface (11).

13. Object (1) made of polymer composite manufactured according to the process according to any one of Claims 1 to 12, from at least two parts (10) made of (meth)acrylic thermoplastic polymer composite, **characterized in that** said thermoplastic polymer composite comprises a fibrous reinforcement and a thermoplastic polymer matrix, preferably a (meth)acrylic thermoplastic polymer matrix, and **in that** the at least two parts (10) made of (meth)acrylic thermoplastic polymer composite are connected by a welded interface (12).

14. Object made of polymer composite according to Claim 13, **characterized in that** it does not comprise more than 50%, preferably not more than 30%, by weight of thermosetting polymer.

15. Object made of polymer composite according to Claim 13, **characterized in that** it does not comprise more than 15%, preferably not more than 10%, by weight of thermosetting polymer.

16. Object made of polymer composite according to one of Claims 13, 14 or 15, **characterized in that** it does not comprise more than 10%, preferably not more than 8%, by weight of adhesive, preferably of thermosetting adhesive.

17. Object made of polymer composite according to one of Claims 13, 14 or 15, **characterized in that** it does not comprise more than 6%, preferably not more than 5%, by weight of thermosetting adhesive.
